# EUROPEAN PATENT APPLICATION

(11) **EP 4 678 430 A1**
(43) Date of publication of application: **14.01.2026**
(21) Application number: 25182297.9
(22) Date of filing: 12.06.2025
(51) Int. Cl.: B60H 1/00, B60H 1/32, B60K 1/00, B60K 1/04

(54) **ELECTRIFIED VEHICLE**

(30) Priority: 11.07.2024 JP 2024111714
(71) Applicant: TOYOTA JIDOSHA KABUSHIKI KAISHA, Toyota-shi, Aichi-ken 471-8571 (JP)
(72) Inventor: MATSUMOTO, Satoru, Toyota-shi, 471-8571 (JP)
(74) Representative: D Young & Co LLP

(57) **Abstract**

An electrified vehicle (30) includes a mechatronic unit (300) incorporating a motor (350) that is a motive power source for driving front wheels (31) and an electric power control device (310) that supplies electricity of a battery (33) to the motor (350). The electrified vehicle (30) includes an integrated thermal unit (400) that is an auxiliary. The mechatronic unit (300) and the integrated thermal unit (400) are installed between the front wheel (31) on a vehicle right side and the front wheel (31) on a vehicle left side, inside a wheel diameter of the front wheel (31) as seen in a vehicle side view.

## Description

### BACKGROUND OF THE INVENTION

### 1. Field of the Invention

The present disclosure relates to an electrified vehicle.

### 2. Description of Related Art

Japanese Unexamined Patent Application Publication No. 2021-030802 (JP 2021-030802 A) discloses an electrified vehicle that travels on only a drive force of a motor by receiving a supply of electricity from a battery. In this electrified vehicle, an inverter is fixed to the top of the motor.

In the electrified vehicle, an electric compressor is installed behind the motor in a vehicle front-rear direction. In the electrified vehicle, a load bearing part that bears load is provided between the electric compressor and a conductor connection part that electrically connects the motor and the inverter to each other. Thus, in the electrified vehicle, in the event of a frontal collision in which an object collides from a vehicle front side, the conductor connection part is protected from the electric compressor as the electric compressor and the load bearing part come into contact with each other.

### SUMMARY OF THE INVENTION

It is desirable to protect not only the motor and the inverter but also auxiliaries represented by the electric compressor from an impact exerted on the vehicle.

An electrified vehicle according to a first aspect of the present disclosure is an electrified vehicle configured to drive front wheels that are drive wheels by electricity stored in a battery. The electrified vehicle includes the battery installed under a floor in a vehicle cabin. The electrified vehicle includes a mechatronic unit incorporating a motor that is a motive power source for driving the front wheels and an electric power control device that is configured to supply the electricity of the battery to the motor. The electrified vehicle includes an auxiliary. The mechatronic unit and the auxiliary are installed frontward of the vehicle cabin in a vehicle front-rear direction. The mechatronic unit and the auxiliary are installed between the front wheel on the vehicle right side and the front wheel on the vehicle left side, inside the wheel diameter of the front wheel as seen in a vehicle side view.

In this electrified vehicle, both the mechatronic unit and the auxiliary can be protected from an impact resulting from a frontal collision.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic view showing the arrangement of devices in an electrified vehicle of one embodiment;
FIG. 2 is a sectional view of the electrified vehicle along line 2-2 in FIG. 1;
FIG. 3 is a schematic view showing the configuration of a motor, a planetary gear speed reduction mechanism, and a differential device in a mechatronic unit of the embodiment; and
FIG. 4 is a configuration diagram showing a heat management system of the embodiment.

### DETAILED DESCRIPTION OF EMBODIMENTS

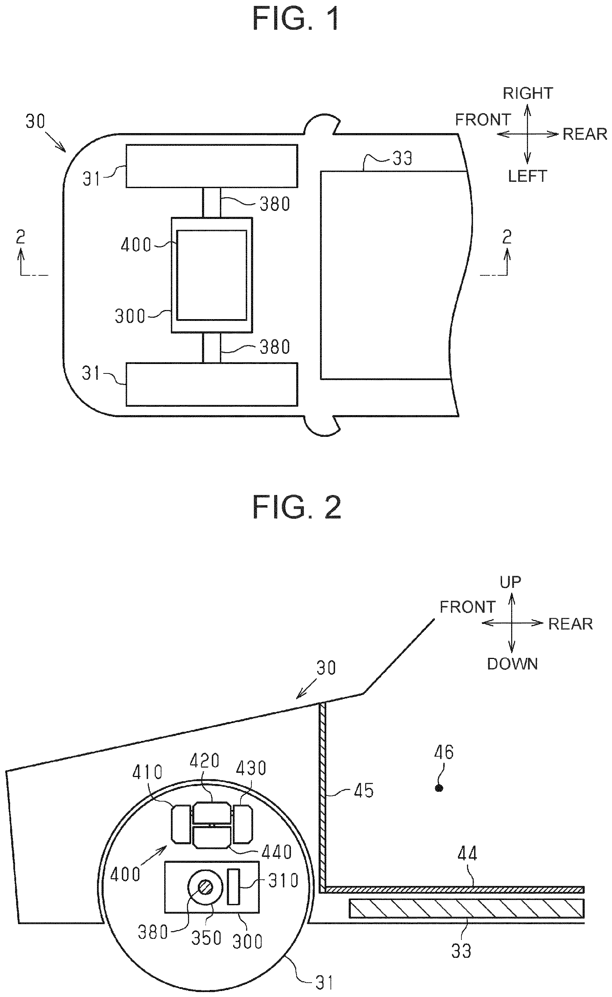

In the following, one embodiment of an electrified vehicle will be described with reference to FIG. 1 to FIG. 4. In the following description, "front," "rear," "left," "right," "up," and "down" mean "front," "rear," "left," "right," "up," and "down" as seen from an occupant in a state of facing a vehicle front side. A right-left direction coincides with a vehicle-width direction.

### Internal Structure of Electrified Vehicle 30

FIG. 1 is a schematic view showing the arrangement of devices as seen in a vehicle top view of an electrified vehicle 30 as looked down on from above. As shown in FIG. 1, the electrified vehicle 30 includes a pair of right and left front wheels 31, a battery 33, a mechatronic unit 300, driveshafts 380, and an integrated thermal unit 400. The configuration of the mechatronic unit 300 and the configuration of the integrated thermal unit 400 will be described later. The mechatronic unit 300, the driveshafts 380, and the integrated thermal unit 400 are installed between the right-side front wheel 31 and the left-side front wheel 31. The integrated thermal unit 400 is installed above the mechatronic unit 300 in a vehicle-height direction.

FIG. 2 is a schematic view of a section of the electrified vehicle 30 in FIG. 1, along line 2-2 in FIG. 1. FIG. 2 schematically shows the internal structure in a vehicle side view of the electrified vehicle 30 as seen from a left side. As shown in FIG. 2, the electrified vehicle 30 includes the battery 33, a floor 44, and a dashboard panel 45. The dashboard panel 45 divides an internal space of the electrified vehicle 30 into a vehicle cabin 46 and a part frontward of the vehicle cabin 46 in a vehicle front-rear direction. The vehicle cabin 46 is a space that is located on a vehicle rear side as seen from the dashboard panel 45. In the electrified vehicle 30, the battery 33 is installed under the floor 44 in the vehicle cabin 46.

The electrified vehicle 30 includes the mechatronic unit 300 and the integrated thermal unit 400 frontward of the dashboard panel 45 in the vehicle front-rear direction. The mechatronic unit 300 and the integrated thermal unit 400 are installed inside a wheel diameter of the front wheel 31 as seen in a vehicle side view.

### Configuration of Mechatronic Unit 300

As shown in FIG. 2, the mechatronic unit 300 is a unit incorporating a motor 350, a motive power transmission mechanism (not shown), and an electric power control device 310. The electric power control device 310 is installed behind the motor 350 in the vehicle front-rear direction. That is, the electric power control device 310 is installed on a side surface of the motor 350. In the electrified vehicle 30, the electric power control device 310 in the mechatronic unit 300 may be installed at a position other than behind the motor 350 in the vehicle front-rear direction. For example, in the mechatronic unit 300, the electric power control device 310 may be installed so as to overlap the motor 350 in a height direction.

The motor 350 is a motive power source that drives the front wheels 31 that are drive wheels through the driveshafts 380. The battery 33 stores electricity to be supplied to the motor 350. That is, the electrified vehicle 30 drives the front wheels 31 that are drive wheels by the electricity stored in the battery 33.

The electric power control device 310 is a device that supplies electricity to the motor 350. The electric power control device 310 includes an inverter that converts direct-current electricity from the battery 33 into alternating-current electricity and supplies it to the motor 350.

The mechatronic unit 300 may include, as the electric power control device 310, a device other than the inverter. The mechatronic unit 300 may include, in addition to the inverter, a DC-DC converter that raises the voltage of the direct-current electricity supplied from the battery 33. In that case, the inverter included as the electric power control device 310 converts the direct-current electricity supplied from the DC-DC converter into alternating-current electricity and supplies it to the motor 350. The mechatronic unit 300 may include, as the electric power control device 310, an electronic control unit (ECU) that controls the electricity to be supplied to the motor 350. The ECU includes a CPU and a memory in which programs and data for control are stored. The ECU executes processing relating to various modes of control as the CPU executes the programs stored in the memory.

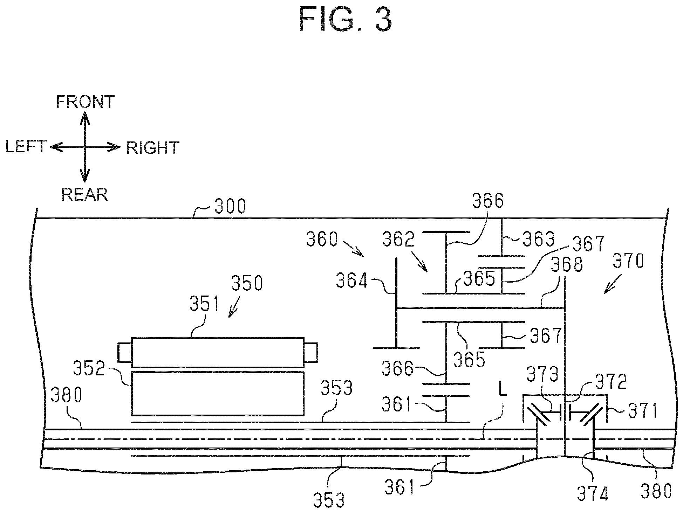

FIG. 3 is a schematic view showing the mechatronic unit 300. As shown in FIG. 3, the mechatronic unit 300 houses the motor 350, a planetary gear speed reduction mechanism 360, and a differential device 370. In the mechatronic unit 300, the motor 350, the planetary gear speed reduction mechanism 360, and the differential device 370 are installed so as to overlap as seen in a vehicle side view. The planetary gear speed reduction mechanism 360 outputs rotation transmitted from the motor 350 after reducing the speed of the rotation. The differential device 370 transmits the rotation transmitted from the planetary gear speed reduction mechanism 360 to the drive wheels through the right and left driveshafts 380. That is, the planetary gear speed reduction mechanism 360, the differential device 370, and the driveshafts 380 are motive power transmission mechanisms.

The mechatronic unit 300 includes the planetary gear speed reduction mechanism 360 rightward of the motor 350 in a vehicle right-left direction. The mechatronic unit 300 includes the differential device 370 rightward of the planetary gear speed reduction mechanism 360 in the vehicle right-left direction. The mechatronic unit 300 may include the planetary gear speed reduction mechanism 360 leftward of the motor 350 in the vehicle right-left direction. In that case, the mechatronic unit 300 includes the differential device 370 leftward of the planetary gear speed reduction mechanism 360 in the vehicle right-left direction.

### Configuration of Motor 350

The motor 350 includes a stator 351, a rotor 352, and an output shaft 353. The stator 351 is fixed on a case of the mechatronic unit 300. The rotor 352 is rotatable with respect to the stator 351. The output shaft 353 is fixed with respect to the rotor 352.

### Configuration of Planetary Gear Speed Reduction Mechanism 360

The planetary gear speed reduction mechanism 360 includes a sun gear 361, a pinion gear 362, a ring gear 363, and a carrier 364. The sun gear 361 is fixed on the output shaft 353 that protrudes to the vehicle right side of the motor 350. The shape of the sun gear 361 is an annular shape with external teeth. The sun gear 361 rotates integrally with the output shaft 353 around a rotational axis L.

The ring gear 363 is fixed on the case of the mechatronic unit 300. The shape of the ring gear 363 is an annular shape with internal teeth. The ring gear 363 is located rightward of the sun gear 361 in the vehicle right-left direction.

The pinion gear 362 includes a pinion shaft 365, a large-diameter pinion gear 366, and a small-diameter pinion gear 367. That is, the pinion gear 362 is a so-called stepped pinion. The large-diameter pinion gear 366 is an externally toothed gear fixed on the pinion shaft 365. The large-diameter pinion gear 366 meshes with the sun gear 361. The small-diameter pinion gear 367 is an externally toothed gear that is fixed on an outer circumferential surface of the pinion shaft 365, at a portion rightward of the large-diameter pinion gear 366 in the vehicle right-left direction. The outside diameter of the small-diameter pinion gear 367 is smaller compared with the outside diameter of the large-diameter pinion gear 366. The small-diameter pinion gear 367 meshes with the ring gear 363. The planetary gear speed reduction mechanism 360 includes three pinion gears 362. In FIG. 3, only one pinion gear 362 is shown as a representative.

The pinion shaft 365 of the pinion gear 362 is rotatably supported by the carrier 364. Specifically, a support shaft 368 of the carrier 364 is passed through the center of the pinion shaft 365. The pinion shaft 365 is supported by the support shaft 368. The shape of the carrier 364 is a disc shape. The pinion gear 362 is rotatable with respect to the carrier 364. That is, the pinion gear 362 is rotatable on its own axis.

The mechatronic unit 300 rotatably supports the carrier 364. That is, the carrier 364 is rotatable with respect to the case of the mechatronic unit 300. The pinion gear 362 is revolvable around the sun gear 361. The carrier 364 is rotatable coaxially with the sun gear 361 as the pinion gear 362 revolves. That is, the carrier 364 rotates around the rotational axis L.

### Configuration of Differential Device 370

The differential device 370 includes a differential case 371, a differential pinion shaft 372, two differential pinion gears 373, and two differential side gears 374. The differential case 371 is integrated with the carrier 364. The differential pinion shaft 372 is provided inside the differential case 371. The differential pinion shaft 372 is orthogonal to the rotational axis L. The differential pinion gears 373 penetrated by the differential pinion shaft 372 and the differential side gears 374 mesh with each other. The right-side differential side gear 374 is connected to the right-side driveshaft 380. The left-side differential side gear 374 is connected to the left-side driveshaft 380.

When the carrier 364 rotates around the rotational axis L, the differential case 371 rotates around the rotational axis L. As the differential case 371 rotates around the rotational axis L, the right and left driveshafts 380 rotate around the rotational axis L through the differential pinion shaft 372, the differential pinion gears 373, and the differential side gears 374. By the above-described gears, the differential device 370 allows a difference to occur in rotation speed between the right and left driveshafts 380. The driveshaft 380 on the vehicle left side passes through an inside of the output shaft 353. The driveshafts 380 are rotatable with respect to the output shaft 353.

In the mechatronic unit 300 mounted in the electrified vehicle 30, the driveshaft 380 need not be passed through the inside of the output shaft 353 of the motor 350. That is, in the mechatronic unit 300 mounted in the electrified vehicle 30, the motor 350, the planetary gear speed reduction mechanism 360, and the differential device 370 need not be installed so as to overlap as seen in a vehicle side view.

### Configuration of Integrated Thermal Unit 400

As shown in FIG. 2, the integrated thermal unit 400 is a unit incorporating a heat management device 410, a refrigerant module 420, a high-voltage heater 430, and an electric compressor 440.

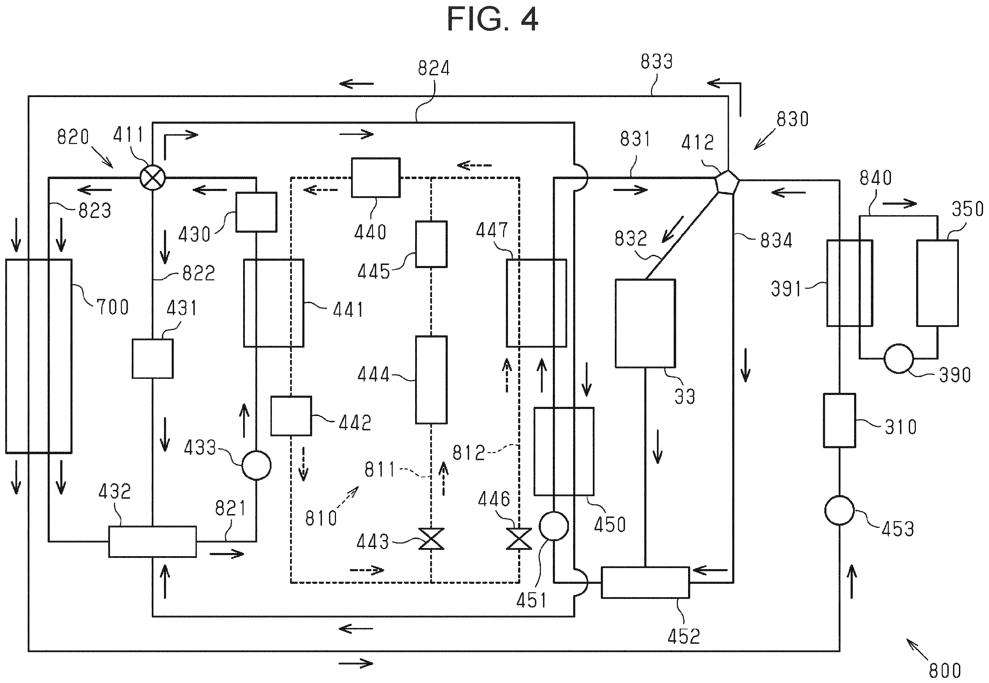

The heat management device 410 is an auxiliary incorporating a four-way valve 411 and a five-way valve 412 shown in FIG. 4. The four-way valve 411 is a valve that causes a heat medium flowing through a second pipe 820, to be described later, to diverge into a plurality of paths. The five-way valve 412 is a valve that causes a heat medium flowing through a third pipe 830, to be described later, to diverge into a plurality of paths. The heat management device 410 may include an ECU that controls the four-way valve 411 and the five-way valve 412.

The refrigerant module 420 is an auxiliary incorporating a water-cooled condenser 441, a first expansion valve 443, a second expansion valve 446, and a chiller 447 shown in FIG. 4. The refrigerant module 420 may include an ECU that controls the first expansion valve 443 and the second expansion valve 446.

The high-voltage heater 430 is an auxiliary that heats a heat medium by electricity supplied from the battery 33. The electric compressor 440 is an auxiliary that compresses a refrigerant by electricity supplied from the battery 33. The high-voltage heater 430 and the electric compressor 440 are high-voltage auxiliaries into which high voltages are input. The integrated thermal unit 400 incorporating the high-voltage heater 430 and the electric compressor 440 is also a high-voltage auxiliary into which a high voltage is input.

The integrated thermal unit 400 is a device constituting a heat management system 800 of the electrified vehicle 30. The heat management system 800 is a system that realizes efficient air conditioning management of the vehicle cabin 46 by an air conditioning device (not shown) while keeping the battery 33 and the mechatronic unit 300 at appropriate temperatures.

### Heat Management System 800

As shown in FIG. 4, the heat management system 800 includes a first pipe 810, the second pipe 820, and the third pipe 830. The first pipe 810 includes an evaporator path 811 and a chiller path 812. A refrigerant flows through the first pipe 810 indicated by the broken lines. That is, the first pipe 810 is a refrigerant pipe. The refrigerant flowing through the first pipe 810 is, for example, a hydrofluorocarbon (HFC)-based refrigerant or a hydrofluoroolefin (HFO)-based refrigerant. The second pipe 820 includes the four-way valve 411, a high-voltage heater path 821, a heater core path 822, a high-temperature radiator path 823, and a heat exchanger path 824. A coolant flows through the second pipe 820 as a heat medium. The third pipe 830 includes a temperature adjustment path 831, the five-way valve 412, a battery path 832, a low-temperature radiator path 833, and a reserve path 834. A coolant flows through the third pipe 830 as a heat medium. The heat medium flowing through the second pipe 820 has a higher temperature than the heat medium flowing through the third pipe 830. An antifreeze liquid may flow through the second pipe 820 and the third pipe 830 as a heat medium. A different type of heat medium may flow through each of the second pipe 820 and the third pipe 830.

### Evaporator Path 811

In the evaporator path 811, the electric compressor 440, the water-cooled condenser 441, a modulator 442, the first expansion valve 443, the evaporator 444, and an evaporator pressure regulator (EPR) 445 are installed. The electric compressor 440 compresses a refrigerant gas and discharges a high-temperature, high-pressure compressed refrigerant gas. When the electric compressor 440 operates, the refrigerant moves in the direction of the broken line arrows shown in FIG. 4. The compressed refrigerant gas discharged from the electric compressor 440 flows into the water-cooled condenser 441.

The water-cooled condenser 441 performs heat exchange between the high-temperature, high-pressure compressed refrigerant gas flowing through the evaporator path 811 and the heat medium flowing through the high-voltage heater path 821. The compressed refrigerant gas flowing through the high-voltage heater path 821 has a higher temperature than the heat medium flowing through the high-voltage heater path 821. Therefore, by heat exchange, the water-cooled condenser 441 heats the heat medium flowing through the high-voltage heater path 821 and cools the compressed refrigerant gas flowing through the evaporator path 811. The compressed refrigerant gas condenses by being cooled in the water-cooled condenser 441. As a result, the compressed refrigerant gas turns into a liquid refrigerant. The liquid refrigerant having passed through the water-cooled condenser 441 flows into the modulator 442. The modulator 442 removes air bubbles from the liquid refrigerant.

The liquid refrigerant having passed through the modulator 442 flows into the first expansion valve 443. The first expansion valve 443 expands the high-pressure liquid refrigerant and turns it into a low-pressure liquid refrigerant. The first expansion valve 443 controls the flow rate of the refrigerant flowing into the evaporator 444. The liquid refrigerant having passed through the first expansion valve 443 flows into the evaporator 444.

The evaporator 444 performs heat exchange between the liquid refrigerant and air inside the air conditioning device (not shown). That is, the evaporator 444 functions as a cooling circuit in the air conditioning device. The evaporator 444 cools the air inside the air conditioning device by absorbing heat of the air inside the air conditioning device. The liquid refrigerant having exchanged heat evaporates and turns into a refrigerant gas.

The refrigerant gas having passed through the evaporator 444 flows into the EPR 445. The EPR 445 controls the flow rate of the refrigerant inside the evaporator path 811. Thus, the EPR 445 controls the pressure inside the evaporator 444. The refrigerant gas having passed through the EPR 445 flows into the electric compressor 440.

### Chiller Path 812

The chiller path 812 connects a downstream side of the modulator 442 and a downstream side of the EPR 445 in the evaporator path 811 to each other and bypasses the evaporator 444 and the EPR 445. In the chiller path 812, the second expansion valve 446 and the chiller 447 are installed. The second expansion valve 446 expands a high-pressure liquid refrigerant and turns it into a low-pressure liquid refrigerant. The second expansion valve 446 controls the flow rate of the refrigerant flowing into the chiller 447. The liquid refrigerant having passed through the second expansion valve 446 flows into the chiller 447.

The chiller 447 performs heat exchange between the liquid refrigerant flowing through the chiller path 812 and the heat medium flowing through the temperature adjustment path 831 in the third pipe 830. The liquid refrigerant flowing through the chiller path 812 has a lower temperature than the heat medium flowing through the temperature adjustment path 831 in the third pipe 830. Therefore, by heat exchange, the chiller 447 cools the heat medium flowing through the temperature adjustment path 831 in the third pipe 830 and heats the liquid refrigerant flowing through the chiller path 812. The heated liquid refrigerant evaporates and turns into a refrigerant gas. The refrigerant gas having passed through the chiller 447 flows into the electric compressor 440.

### High-Voltage Heater Path 821

In the high-voltage heater path 821, a reserve tank 432, a pump 433, the water-cooled condenser 441, and the high-voltage heater 430 are installed. In the reserve tank 432, a heat medium is reserved. The pump 433 discharges the heat medium reserved in the reserve tank 432 from the reserve tank 432 toward the water-cooled condenser 441. When the pump 433 operates, the heat medium inside the second pipe 820 moves in the direction of the arrows shown in FIG. 4. The heat medium discharged from the pump 433 flows into the water-cooled condenser 441 installed downstream of the pump 433.

The water-cooled condenser 441 performs heat exchange between the heat medium flowing through the high-voltage heater path 821 and the high-temperature, high-pressure compressed refrigerant gas flowing through the evaporator path 811. The heat medium flowing through the high-voltage heater path 821 has a lower temperature than the compressed refrigerant gas flowing through the evaporator path 811. Therefore, by heat exchange, the water-cooled condenser 441 cools the compressed refrigerant gas flowing through the evaporator path 811 and heats the heat medium flowing through the high-voltage heater path 821.

The heat medium having passed through the water-cooled condenser 441 flows into the high-voltage heater 430. The high-voltage heater 430 heats the heat medium flowing through the high-voltage heater path 821 by electricity supplied from the battery 33. The heat medium having passed through the high-voltage heater 430 flows into the four-way valve 411.

The four-way valve 411 is configured to be able to cause the heat medium having flowed in from the high-voltage heater path 821 to diverge into the heater core path 822, the high-temperature radiator path 823, and the heat exchanger path 824. By the four-way valve 411, the heat management system 800 can variably control a ratio of the heat medium diverging into the heater core path 822, a ratio thereof diverging into the high-temperature radiator path 823, and a ratio thereof diverging into the heat exchanger path 824.

### Heater Core Path 822

In the heater core path 822, a heater core 431 is installed. As the heat medium having been heated in the high-voltage heater path 821 flows into the heater core path 822 through the four-way valve 411, the high-temperature heat medium flows into the heater core 431. The heater core 431 performs heat exchange between the heat medium and the air inside the air conditioning device (not shown). That is, the heater core 431 functions as a heating circuit in the air conditioning device. The heat medium flowing through the heater core 431 heats the air inside the air conditioning device. After passing through the heater core 431, the heat medium flowing through the heater core path 822 is reserved in the reserve tank 432.

### High-Temperature Radiator Path 823

In the high-temperature radiator path 823, a radiator 700 is installed. The radiator 700 cools the heat medium flowing through the high-temperature radiator path 823 by heat exchange between the heat medium flowing through the high-temperature radiator path 823 and air outside the electrified vehicle 30.

When the heat medium is flowing through the low-temperature radiator path 833 in the third pipe 830 to be described later, the radiator 700 heats the heat medium flowing through the low-temperature radiator path 833 by heat exchange between the heat medium flowing through the high-temperature radiator path 823 and the heat medium flowing through the low-temperature radiator path 833. The heat management system 800 adjusts the flow rate of the heat medium flowing through the low-temperature radiator path 833 by controlling the five-way valve 412 to be described later. After passing through the radiator 700, the heat medium flowing through the high-temperature radiator path 823 is reserved in the reserve tank 432.

### Heat Exchanger Path 824

In the heat exchanger path 824, a heat exchanger 450 is installed. The heat exchanger 450 performs heat exchange between the heat medium flowing through the heat exchanger path 824 and the heat medium flowing through the temperature adjustment path 831 in the third pipe 830. The heat medium flowing through the heat exchanger path 824 has a higher temperature than the heat medium flowing through the temperature adjustment path 831. Therefore, by heat exchange, the heat exchanger 450 heats the heat medium flowing through the temperature adjustment path 831 and cools the heat medium flowing through the heat exchanger path 824. After passing through the heat exchanger 450, the heat medium flowing through the heat exchanger path 824 is reserved in the reserve tank 432.

### Temperature Adjustment Path 831

In the temperature adjustment path 831, a reserve tank 452, a pump 451, the heat exchanger 450, and the chiller 447 are installed. In the reserve tank 452, a heat medium is reserved. The pump 451 discharges the heat medium reserved in the reserve tank 452 toward the heat exchanger 450. When the pump 451 operates, the heat medium inside the third pipe 830 moves in the direction of the arrows shown in FIG. 4. The heat medium discharged from the pump 451 flows into the heat exchanger 450 installed downstream of the pump 451.

The heat exchanger 450 performs heat exchange between the heat medium flowing through the temperature adjustment path 831 and the heat medium flowing through the heat exchanger path 824. The heat medium flowing through the temperature adjustment path 831 has a lower temperature than the heat medium flowing through the heat exchanger path 824. Therefore, by heat exchange, the heat exchanger 450 cools the heat medium flowing through the heat exchanger path 824 and heats the heat medium flowing through the temperature adjustment path 831. After passing through the heat exchanger 450, the heat medium flowing through the temperature adjustment path 831 flows into the chiller 447.

The chiller 447 performs heat exchange between the heat medium flowing through the temperature adjustment path 831 and the liquid refrigerant flowing through the chiller path 812. The heat medium flowing through the temperature adjustment path 831 has a higher temperature than the liquid refrigerant flowing through the chiller path 812. Therefore, by heat exchange, the chiller 447 heats the liquid refrigerant flowing through the chiller path 812 and cools the heat medium flowing through the temperature adjustment path 831. The heat medium flowing through the temperature adjustment path 831 has its temperature adjusted by being heated by the heat exchanger 450 and being cooled by the chiller 447. After passing through the chiller 447, the heat medium flowing through the temperature adjustment path 831 flows into the five-way valve 412.

The five-way valve 412 is configured to be able to cause the heat medium having been discharged from the pump 451 and passed through the temperature adjustment path 831 to diverge into the battery path 832, the low-temperature radiator path 833, and the reserve path 834. By the five-way valve 412, the heat management system 800 can variably control a ratio of the heat medium having flowed from the temperature adjustment path 831 into the five-way valve 412 diverging into the battery path 832, a ratio thereof diverging into the low-temperature radiator path 833, and a ratio thereof diverging into the reserve path 834.

### Battery Path 832 and Reserve Path 834

In the battery path 832, the battery 33 is installed. The battery 33 is cooled or heated by heat exchange with the heat medium flowing through the battery path 832. The heat medium having passed through the battery 33 is reserved in the reserve tank 452. In the reserve path 834, the reserve tank 452 is installed. In the reserve tank 452, the heat medium is reserved.

### Low-Temperature Radiator Path 833

In the low-temperature radiator path 833, the radiator 700, a pump 453, the electric power control device 310, and an oil cooler 391 are installed.

The radiator 700 cools the heat medium flowing through the low-temperature radiator path 833 by heat exchange between the heat medium flowing through the low-temperature radiator path 833 and the air outside the electrified vehicle 30.

When the heat medium flowing through the low-temperature radiator path 833 needs to be heated, the heat management system 800 adjusts the flow rate of the heat medium flowing through the high-temperature radiator path 823 by controlling the four-way valve 411. When the heat medium is flowing through the high-temperature radiator path 823, the radiator 700 heats the heat medium flowing through the low-temperature radiator path 833 by heat exchange between the heat medium flowing through the low-temperature radiator path 833 and the heat medium flowing through the high-temperature radiator path 823.

After passing through the radiator 700, the heat medium flowing through the low-temperature radiator path 833 flows into the pump 453. The pump 453 discharges the heat medium flowing through the low-temperature radiator path 833 toward the electric power control device 310. Thus, the heat medium flowing through the low-temperature radiator path 833 moves in the direction of the arrows shown in FIG. 4. In the low-temperature radiator path 833 downstream of the pump 453, the electric power control device 310 is installed. The electric power control device 310 is heated or cooled by heat exchange with the heat medium flowing through the low-temperature radiator path 833.

In the low-temperature radiator path 833 downstream of the electric power control device 310, the oil cooler 391 is installed. An oil circulation path 840 is connected to the oil cooler 391. The oil cooler 391 heats or cools oil flowing through the oil circulation path 840 by heat exchange between the heat medium flowing through the low-temperature radiator path 833 and the oil flowing through the oil circulation path 840. The oil circulation path 840 is installed so as to pass through an inside of the mechatronic unit 300. The oil circulation path 840 includes an oil pump 390. The oil pump 390 discharges the oil having passed through the mechatronic unit 300 toward the oil cooler 391. When the oil pump 390 operates, the oil inside the oil circulation path 840 moves in the direction of the arrow shown in FIG. 4. When the oil having been cooled in the oil cooler 391 circulates through the oil circulation path 840, the motor 350 included in the mechatronic unit 300 is cooled. The oil circulation path 840 may be installed such that further the planetary gear speed reduction mechanism 360 and the differential device 370 are cooled. The low-temperature radiator path 833 may be installed so as to cool other devices than the electric power control device 310 and the oil cooler 391.

After passing through the oil cooler 391, the heat medium flowing through the low-temperature radiator path 833 flows into the five-way valve 412. That is, the five-way valve 412 is configured such that the heat medium having flowed through the low-temperature radiator path 833 can merge. By the five-way valve 412, the heat management system 800 can variably control a ratio of the heat medium having flowed from the low-temperature radiator path 833 into the five-way valve 412 diverging into the battery path 832, a ratio thereof diverging into the reserve path 834, and a ratio thereof flowing into the low-temperature radiator path 833 again.

### Workings of Embodiment

As shown in FIG. 2, in the electrified vehicle 30, the mechatronic unit 300 and the integrated thermal unit 400 are installed between the front wheel 31 on the vehicle right side and the front wheel 31 on the vehicle left side, inside the wheel diameter of the front wheel 31 as seen in a vehicle side view. In the event of a frontal collision of the electrified vehicle 30, an impact resulting from the frontal collision reaches the front wheels 31 before reaching the mechatronic unit 300 and the integrated thermal unit 400 that is a high-voltage auxiliary. The front wheels 31 absorb part of the impact resulting from the frontal collision. Thus, in the electrified vehicle 30, compared with a vehicle in which the mechatronic unit 300 and the integrated thermal unit 400 are installed outside the wheel diameter of the front wheel 31 as seen in a vehicle side view, an impact resulting from a frontal collision that is exerted on the mechatronic unit 300 and the integrated thermal unit 400 is reduced.

### Advantages of Embodiment

(1) In the electrified vehicle 30, both the mechatronic unit 300 and the high-voltage auxiliary to which high-voltage electricity is supplied from the battery 33 can be protected from an impact resulting from a frontal collision.
(2) In the mechatronic unit 300 installed in the electrified vehicle 30, one of the driveshafts 380 passes through the inside of the output shaft 353. In the electrified vehicle 30, the motor 350, the planetary gear speed reduction mechanism 360, and the differential device 370 are installed so as to overlap as seen in a vehicle side view. Thus, compared with a mechatronic unit in which the output shaft of the motor and the driveshaft of the wheel do not overlap as seen in a vehicle side view, the mechatronic unit 300 installed in the electrified vehicle 30 is reduced in size in a vehicle-length direction and the vehicle-height direction. In the electrified vehicle 30, therefore, the mechatronic unit 300 and the integrated thermal unit 400 that is a high-voltage auxiliary can be installed closer to the driveshafts 380 of the front wheels 31. As a result, an impact from the vehicle front side is less likely to reach the mechatronic unit 300 and the integrated thermal unit 400. In the electrified vehicle 30, the mechatronic unit 300 and the high-voltage auxiliary can be protected from an impact resulting from a frontal collision.
(3) In the electrified vehicle 30, the electric compressor 440 that compresses the refrigerant by electricity supplied from the battery 33 is installed between the front wheel 31 on the vehicle right side and the front wheel 31 on the vehicle left side, inside the wheel diameter of the front wheel 31 as seen in a vehicle side view. In the event of a frontal collision of the electrified vehicle 30, an impact resulting from the frontal collision reaches the front wheels 31 before reaching the electric compressor 440. The front wheels 31 absorb part of the impact resulting from the frontal collision. Thus, in the electrified vehicle 30, compared with a vehicle in which the electric compressor 440 is installed outside the wheel diameter of the front wheel 31 as seen in a vehicle side view, an impact resulting from a frontal collision that is exerted on the electric compressor 440 is reduced. In the electrified vehicle 30, the electric compressor 440 that is a high-voltage auxiliary can be protected from an impact resulting from a frontal collision.
(4) In the electrified vehicle 30, the high-voltage heater 430 that heats the heat medium flowing through the second pipe 820 by electricity supplied from the battery 33 is installed between the front wheel 31 on the vehicle right side and the front wheel 31 on the vehicle left side, inside the wheel diameter of the front wheel 31 as seen in a vehicle side view. In the event of a frontal collision of the electrified vehicle 30, an impact resulting from the frontal collision reaches the front wheels 31 before reaching the high-voltage heater 430. The front wheels 31 absorb part of the impact resulting from the frontal collision. Thus, in the electrified vehicle 30, compared with a vehicle in which the high-voltage heater 430 is installed outside the wheel diameter of the front wheel 31 as seen in a vehicle side view, an impact resulting from a frontal collision that is exerted on the high-voltage heater 430 is reduced. In the electrified vehicle 30, the high-voltage heater 430 that is a high-voltage auxiliary can be protected from an impact resulting from a frontal collision.
(5) In the electrified vehicle 30, the integrated thermal unit 400 including the electric compressor 440 that compresses the refrigerant by electricity supplied from the battery 33 and the high-voltage heater 430 that heats the heat medium flowing through the second pipe 820 by electricity supplied from the battery 33 is installed between the front wheel 31 on the vehicle right side and the front wheel 31 on the vehicle left side, inside the wheel diameter of the front wheel 31 as seen in a vehicle side view. In the event of a frontal collision of the electrified vehicle 30, an impact resulting from the frontal collision reaches the front wheels 31 before reaching the integrated thermal unit 400. The front wheels 31 absorb part of the impact resulting from the frontal collision. Thus, in the electrified vehicle 30, compared with a vehicle in which the integrated thermal unit 400 is installed outside the wheel diameter of the front wheel 31 as seen in a vehicle side view, an impact resulting from a frontal collision that is exerted on the integrated thermal unit 400 is reduced. In the electrified vehicle 30, the integrated thermal unit 400 that is a high-voltage auxiliary can be protected from an impact resulting from a frontal collision.
(6) In the electrified vehicle 30, the integrated thermal unit 400 is installed above the mechatronic unit 300 in the vehicle-height direction. In this case, compared with when the integrated thermal unit 400 is installed in front of the mechatronic unit 300 in the vehicle front-rear direction, the distance between a front end of the front wheel 31 and the integrated thermal unit 400 is longer. Thus, in the electrified vehicle 30, more of an impact from the vehicle front side can be borne by the front wheels 31 before the impact reaches the integrated thermal unit 400. As a result, in the electrified vehicle 30, the integrated thermal unit 400 can be favorably protected from the impact resulting from the frontal collision.

### Modified Examples

The embodiment can be implemented with modifications made thereto as follows. The embodiment and the following modified examples can be implemented in combination within such a range that no technical contradiction arises.
- The high-voltage auxiliary is not limited to the integrated thermal unit 400 into which the electric compressor 440 and the high-voltage heater 430 are integrated. For example, the electrified vehicle 30 may include each of the electric compressor 440 and the high-voltage heater 430 as a high-voltage auxiliary between the front wheel 31 on the vehicle right side and the front wheel 31 on the vehicle left side, inside the wheel diameter of the front wheel 31 as seen in a vehicle side view.
- The auxiliary in the electrified vehicle 30 that is installed between the front wheel 31 on the vehicle right side and the front wheel 31 on the vehicle left side, inside the wheel diameter of the front wheel 31 as seen in a vehicle side view is not limited to a high-voltage auxiliary. For example, an auxiliary that operates as low-voltage electricity is supplied thereto, like the ECU that controls the four-way valve 411 and the five-way valve 412, may be installed between the front wheel 31 on the vehicle right side and the front wheel 31 on the vehicle left side, inside the wheel diameter of the front wheel 31 as seen in a vehicle side view. In this case, in the electrified vehicle 30, this auxiliary can be protected from an impact resulting from a frontal collision.
- As long as the mechatronic unit 300 and the auxiliary are installed between the front wheel 31 on the vehicle right side and the front wheel 31 on the vehicle left side, inside the wheel diameter of the front wheel 31 as seen in a vehicle side view, in the mechatronic unit 300 mounted in the electrified vehicle 30, the driveshaft 380 need not be passed through the inside of the output shaft 353 of the motor 350. For example, in the mechatronic unit 300 mounted in the electrified vehicle 30, the motor 350, the planetary gear speed reduction mechanism 360, and the differential device 370 need not be installed so as to overlap as seen in a vehicle side view. Also in this case, in the electrified vehicle 30, the mechatronic unit 300 and the auxiliary can be protected from an impact resulting from a frontal collision and an impact resulting from a lateral collision.
- The position where the auxiliary is installed is not limited to above the mechatronic unit 300, as long as the position is between the front wheel 31 on the vehicle right side and the front wheel 31 on the vehicle left side, inside the wheel diameter of the front wheel 31 as seen in a vehicle side view. For example, the high-voltage auxiliary may be installed behind the mechatronic unit 300 in the vehicle front-rear direction. Also in this case, in the electrified vehicle 30, the mechatronic unit 300 and the auxiliary can be protected from an impact resulting from a frontal collision.
- The electrified vehicle 30 may include, in addition to the battery 33, an auxiliary battery that supplies electricity to auxiliaries. This auxiliary battery may be configured to be able to supply electricity to high-voltage auxiliaries. For example, the integrated thermal unit 400 may be supplied with electricity from this auxiliary battery. For example, the high-voltage heater 430 may be supplied with electricity from this auxiliary battery. For example, the electric compressor 440 may be supplied with electricity from this auxiliary battery. This auxiliary battery may be configured to be able to supply electricity to auxiliaries that operate as low-voltage electricity is supplied thereto. For example, the ECU that controls the four-way valve 411 and the five-way valve 412 may be supplied with electricity from this auxiliary battery.

### Supplement

Technical ideas that can be grasped from the above-described embodiment and modified examples will be described.

### Supplement 1

An electrified vehicle that drives front wheels that are drive wheels by electricity stored in a battery, the electrified vehicle including: the battery; a mechatronic unit incorporating a motor that is a motive power source for driving the front wheels and an electric power control device that supplies the electricity of the battery to the motor; and an auxiliary, wherein: the battery is installed under a floor in a vehicle cabin; the mechatronic unit and the auxiliary are installed frontward of the vehicle cabin in a vehicle front-rear direction; and the mechatronic unit and the auxiliary are installed between the front wheel on a vehicle right side and the front wheel on a vehicle left side, inside a wheel diameter of the front wheel as seen in a vehicle side view.

### Supplement 2

The electrified vehicle according to supplement 1, including, as the auxiliary, a high-voltage auxiliary that is supplied with electricity from the battery.

### Supplement 3

The electrified vehicle according to supplement 1 or supplement 2, wherein the mechatronic unit includes, as a motive power transmission mechanism that transmits rotative power of the motor to the front wheels, a planetary gear speed reduction mechanism that outputs rotation transmitted from the motor after reducing speed of the rotation and a differential device that transmits the rotation transmitted from the planetary gear speed reduction mechanism to the front wheels through right and left driveshafts. The planetary gear speed reduction mechanism includes: a sun gear provided on an output shaft of the motor; a plurality of pinion gears that meshes with the sun gear and is configured to revolve around a rotational axis of the sun gear; a ring gear that meshes with the pinion gears; and a carrier that rotatably supports the pinion gears and rotates coaxially with the sun gear as the pinion gears revolve. The differential device includes: a differential case that is integrated with the carrier; a differential pinion shaft that is provided in the differential case and orthogonal to the rotational axis; a plurality of differential pinion gears that is penetrated by the differential pinion shaft; and a plurality of differential side gears that meshes with the differential pinion gears and is connected to the driveshafts. The driveshafts rotate through the differential pinion shaft, the differential pinion gears, and the differential side gears when the differential case rotates as the carrier rotates. The motor, the carrier, the differential case, and the driveshafts rotate around the rotational axis. One of the driveshafts passes through an inside of the output shaft. The motor, the planetary gear speed reduction mechanism, and the differential device are installed so as to overlap as seen in a vehicle side view.

### Supplement 4

The electrified vehicle according to any one of supplement 1 to supplement 3, including, as the high-voltage auxiliary that is supplied with electricity from the battery, an electric compressor that compresses a refrigerant by electricity supplied from the battery.

### Supplement 5

The electrified vehicle according to any one of supplement 1 to supplement 4, including, as the high-voltage auxiliary that is supplied with electricity from the battery, a high-voltage heater that heats a heat medium flowing through a pipe by electricity supplied from the battery.

### Supplement 6

The electrified vehicle according to any one of supplement 1 to supplement 3, wherein the high-voltage auxiliary that is supplied with electricity from the battery is an integrated thermal unit including an electric compressor that compresses a refrigerant by electricity supplied from the battery and a high-voltage heater that heats a heat medium flowing through a pipe by electricity supplied from the battery.

### Supplement 7

The electrified vehicle according to any one of supplement 1 to supplement 6, wherein the auxiliary is installed above the mechatronic unit in a vehicle-height direction.

## Claims

1. An electrified vehicle (30) configured to drive front wheels (31) that are drive wheels by electricity stored in a battery (33), the electrified vehicle (30) comprising:
the battery (33) installed under a floor in a vehicle cabin;
a mechatronic unit (300) incorporating a motor (350) that is a motive power source for driving the front wheels (31) and an electric power control device (310) that is configured to supply the electricity of the battery (33) to the motor (350); and
an auxiliary (400), wherein:
the mechatronic unit (300) and the auxiliary (400) are installed frontward of the vehicle cabin in a vehicle front-rear direction; and
the mechatronic unit (300) and the auxiliary (400) are installed between the front wheel (31) on a vehicle right side and the front wheel (31) on a vehicle left side, inside a wheel diameter of the front wheel (31) as seen in a vehicle side view.

2. The electrified vehicle (30) according to claim 1, further comprising, as the auxiliary (400), a high-voltage auxiliary (400) that is supplied with electricity from the battery (33).

3. The electrified vehicle (30) according to claim 1 or claim 2, wherein:
the mechatronic unit (300) includes, as a motive power transmission mechanism that transmits rotative power of the motor (350) to the front wheels (31), a planetary gear speed reduction mechanism (360) configured to output rotation transmitted from the motor after reducing speed of the rotation and a differential device (370) configured to transmit the rotation transmitted from the planetary gear speed reduction mechanism (360) to the front wheels (31) through right and left driveshafts,
the planetary gear speed reduction mechanism (360) includes:
a sun gear (361) provided on an output shaft of the motor (350);
a plurality of pinion gears (362) that meshes with the sun gear (361) and is configured to revolve around a rotational axis of the sun gear (361);
a ring gear (363) configured to mesh with the pinion gears (362); and
a carrier (364) configured to rotatably support the pinion gears (362) and rotate coaxially with the sun gear (361) as the pinion gears (362) revolve;
the differential device (370) includes:
a differential case (371) that is integrated with the carrier (364);
a differential pinion shaft (372) that is provided in the differential case (371) and orthogonal to the rotational axis;
a plurality of differential pinion gears (373) that is penetrated by the differential pinion shaft (372); and
a plurality of differential side gears (374) that meshes with the differential pinion gears (373) and is connected to the driveshafts;
the driveshafts are configured to rotate through the differential pinion shaft (372), the differential pinion gears (373), and the differential side gears (374) when the differential case (371) rotates as the carrier (364) rotates;
the motor (350), the carrier (364), the differential case (371), and the driveshafts are configured to rotate around the rotational axis;
one of the driveshafts passes through an inside of the output shaft; and
the motor (350), the planetary gear speed reduction mechanism (360), and the differential device (370) are installed so as to overlap as seen in the vehicle side view.

4. The electrified vehicle (30) according to claim 2, further comprising, as the high-voltage auxiliary (400), an electric compressor (440) configured to compress a refrigerant by electricity supplied from the battery.

5. The electrified vehicle (30) according to claim 2, further comprising, as the high-voltage auxiliary (400), a high-voltage heater (430) configured to heat a heat medium flowing through a pipe by electricity supplied from the battery (33).

6. The electrified vehicle (30) according to claim 2, wherein the high-voltage auxiliary (400) is an integrated thermal unit (400) including an electric compressor (440) configured to compress a refrigerant by electricity supplied from the battery and a high-voltage heater (430) configured to heat a heat medium flowing through a pipe by electricity supplied from the battery (33).

7. The electrified vehicle (30) according to claim 1, wherein the auxiliary (400) is installed above the mechatronic unit (300) in a vehicle-height direction.
